# FASCICULE DE BREVET EUROPEEN

(11) **EP 3 972 811 B1**
(45) Date de publication et mention de la délivrance du brevet: **26.03.2025**
(21) Numéro de dépôt: 20737520.5
(22) Date de dépôt: 20.05.2020
(51) Int. Cl.: B29C 64/118, B29C 64/209, B29C 64/227, B29C 64/343, B29C 64/393, B33Y 10/00, B33Y 30/00

(54) **PROCEDE D'IMPRESSION EN TROIS DIMENSIONS A SECTION VARIABLE**
DREIDIMENSIONALES DRUCKVERFAHREN MIT VARIABLEN ABSCHNITTEN
THREE DIMENSIONAL PRINTING METHOD WITH VARIABLE SECTIONS

(30) Priorité: 21.05.2019 FR 1905323
(43) Date de publication de la demande: 30.03.2022
(73) Titulaire: Safran Helicopter Engines, 64510 Bordes (FR)
(72) Inventeur: CHARES, Laurent, 77550 Moissy-Cramayel (FR)
(74) Mandataire: Gevers & Orès
(86) Numéro de dépôt international: PCT/FR2020/050837
(87) Numéro de publication internationale: WO 2020/245520

(56) Documents cités:
- CN-A- 108 237 690
- DE-A1- 102017 207 291
- PT-A- 109 947
- US-A- 6 113 696
- US-A1- 2017 182 701

## Description

### Domaine technique de l'invention

L'invention concerne un procédé d'impression en trois dimensions d'une pièce.

L'invention concerne plus particulièrement un procédé d'impression en trois dimensions dit "par fil fondu" réalisé à partir d'un filament thermoplastique préalablement chauffé et liquéfié par un élément chauffant pour le liquéfier, et déposé au moyen d'une buse pour former des couches de la pièce à réaliser.

### Arrière-plan technique

Un procédé d'impression 3D par dépôt de fil fondu consiste à faire passer un filament thermoplastique dans une tête d'impression comportant un élément chauffant et une buse calibrée. Une bobine de filament thermoplastique approvisionne l'élément chauffant qui liquéfie ce filament. La bobine pousse le filament au travers de l'élément chauffant vers une buse calibrée par laquelle il ressort en filament plus ou moins liquide, calibré selon une section de la buse. Le déplacement simultané de la tête suivant un parcours déterminé permet de créer une couche de la pièce en construction. Par un empilement de couches successives, pleines ou alvéolées, on constitue ainsi la pièce souhaitée.

Les buses calibrées sont généralement amovibles de manière à permettre un choix quant à la qualité de l'impression. Plus la buse possède une section de sortie réduite, plus elle permet de réaliser une impression fine capable de matérialiser avec précision des détails de la pièce, mais en contrepartie plus la vitesse d'impression est lente. Inversement, plus la buse possède une section de sortie élevée, plus elle permet de réaliser une impression grossière, mais de remplir rapidement de grandes surfaces avec une vitesse d'impression élevée.

Actuellement, il n'existe aucune possibilité de changer les buses en cours d'impression. Le choix de la buse doit être fait avant le lancement de l'impression de sorte que l'impression d'une pièce résulte d'un compromis effectué préalablement avant l'impression entre la finesse de l'impression, réalisée au moyen d'une buse de section réduite, et la rapidité d'impression, réalisée au moyen d'une buse de section plus importante.

Cette conception ne permet donc pas d'optimiser l'impression.

En effet, si l'on choisit une buse de section réduite, celle-ci permet l'impression de détails agencés à proximité de bords libres de la pièce, mais le remplissage des parties de la pièce qui ne sont pas agencées à proximité de bords libres de la pièce s'effectue très lentement. Il en résulte un temps de réalisation de la pièce élevé.

Inversement, si l'on choisit une buse de section élevée, celle-ci permet un remplissage rapide des parties de la pièce qui ne sont pas agencées à proximité des bords libres de la pièce, mais ne permet pas l'impression des détails agencés à proximité de bords libres de la pièce avec une qualité satisfaisante. Au temps de réalisation rapide de la pièce doit s'ajouter celui d'une étape de finition permettant d'obtenir les détails souhaités.

Pour remédier à ces inconvénients, on a proposé dans les documents PT-109.947-A, US-2017/182.701-A1, CN-108.237.690-A1, DE-10.2017.207.291-A1 des procédés d'impression mettant en œuvre des buses de section variable. Toutefois ces documents ne décrivent pas de procédé permettant d'obtenir un contour précis de la pièce fabriquée.

### Résumé de l'invention

L'invention remédie à cet inconvénient en proposant un procédé d'impression en trois dimensions mettant en œuvre une buse dont la section est variable en cours d'impression.

Dans ce but, l'invention propose un procédé d'impression en trois dimensions d'une pièce, comportant une succession d'étapes au cours de chacune desquelles on réalise une couche pleine ou alvéolaire de la pièce à obtenir, chacune de ces étapes comportant le passage d'un filament thermoplastique au travers d'un élément chauffant pour le liquéfier, puis le passage du filament thermoplastique liquéfié au travers d'au moins une buse ayant une section de sortie, puis la dépose du filament thermoplastique liquéfié sortant de ladite au moins une buse et le déplacement simultané de ladite au moins une buse en suivant un parcours déterminé dont la totalité correspond à la couche de la pièce à obtenir, dans lequel, au cours d'au moins une étape de réalisation d'une couche par remplissage, on utilise une dite au moins une buse dont un tronçon de sortie est de section de sortie variable entre une première section, maximale, et une seconde section, minimale, et en ce que l'on fait varier la section d'au moins une partie dudit tronçon de sortie de ladite au moins une buse le long d'au moins une partie du parcours déterminé. caractérisé en ce qu'il comporte une étape initiale de réalisation d'une couche, préalable à ladite au moins une étape de réalisation d'une couche par remplissage, au cours de laquelle on dépose avec la buse le contour de la couche, de manière à construire une paroi extérieure délimitant la couche, en utilisant la buse avec sa seconde section minimale, de manière à déposer un contour de ladite couche avec une précision fine.

Selon d'autres caractéristiques du procédé :
- au cours de l'étape de réalisation d'une couche par remplissage, on utilise la première section de la buse le long d'au moins une première partie du parcours associée à une partie pleine de la pièce exempte de détails,
- au cours de l'étape de réalisation d'une couche par remplissage, on utilise la seconde section de la buse le long d'au moins une deuxième partie du parcours associée à une partie de la pièce comportant des détails, cette deuxième partie étant située à proximité d'un bord libre de la pièce,
- au cours de l'étape de réalisation d'une couche par remplissage, on utilise au moins une section de la buse qui est intermédiaire entre les première et deuxième sections le long d'au moins une troisième partie du parcours intermédiaire entre les première et deuxième partie,

L'invention concerne aussi une buse d'impression pour une impression en trois dimensions à partir d'un filament thermoplastique, ladite buse comportant un corps dans lequel est formé un conduit comportant au moins un tronçon d'entrée qui est configuré pour être alimenté en filament thermoplastique préalablement liquéfié et un tronçon de sortie de section maximale, ladite buse comportant des moyens de réduction mobiles de la section du tronçon de sortie selon une section minimale, les moyens de réduction mobiles comportant un logement qui débouche dans le tronçon de sortie de la buse et à l'intérieur duquel un tiroir est mobile entre une position rétractée dans le logement associée à la section maximale de la buse et une position étendue dans laquelle il fait saillie dans le tronçon de sortie de la buse pour réduire sa section selon la section minimale, une extrémité libre du tiroir étant, dans sa position étendue, située au niveau d'un orifice de sortie du tronçon de sortie de la buse, caractérisé en ce que le conduit, le logement et le tiroir sont sensiblement cylindriques et un axe du logement et du tiroir forme un angle déterminé avec un axe du tronçon de sortie du conduit, l'angle étant compris entre 30 et 45°.

Selon une autre caractéristique de la buse, la section maximale est au moins quatre fois supérieure à la section minimale.

### Brève description des figures

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
[Fig.1] la figure 1 est une vue très schématique en perspective d'une pièce réalisée par un procédé d'impression en trois dimensions ;
[Fig.2] la figure 2 est une vue très schématique d'une couche de la pièce de la figure 1 ;
[Fig.3] la figure 3 est une vue très schématique du parcours suivi par une buse conventionnelle de section réduite pour réaliser la couche de la figure 1 ;
[Fig.4] la figure 4 est une vue très schématique du parcours suivi par une buse conventionnelle de section élevée pour réaliser la couche de la figure 1 ;
[Fig.5] la figure 5 est une vue très schématique du parcours suivi par une buse selon l'invention de section élevée pour réaliser la couche de la figure 1 ;
[Fig.6] la figure 6 est une vue schématique en coupe d'une tête d'impression comportant une buse selon l'état de la technique
[Fig.7A-7B] les figures 7A et 7B sont des vues schématiques en coupe axiale et transversale d'une buse selon l'invention représentée en position de section élevée ; et
[Fig.8A-8B] les figures 8A et 8B sont des vues schématiques en coupe axiale et transversale d'une buse selon l'invention représentée en position de section réduite.

### Description détaillée de l'invention

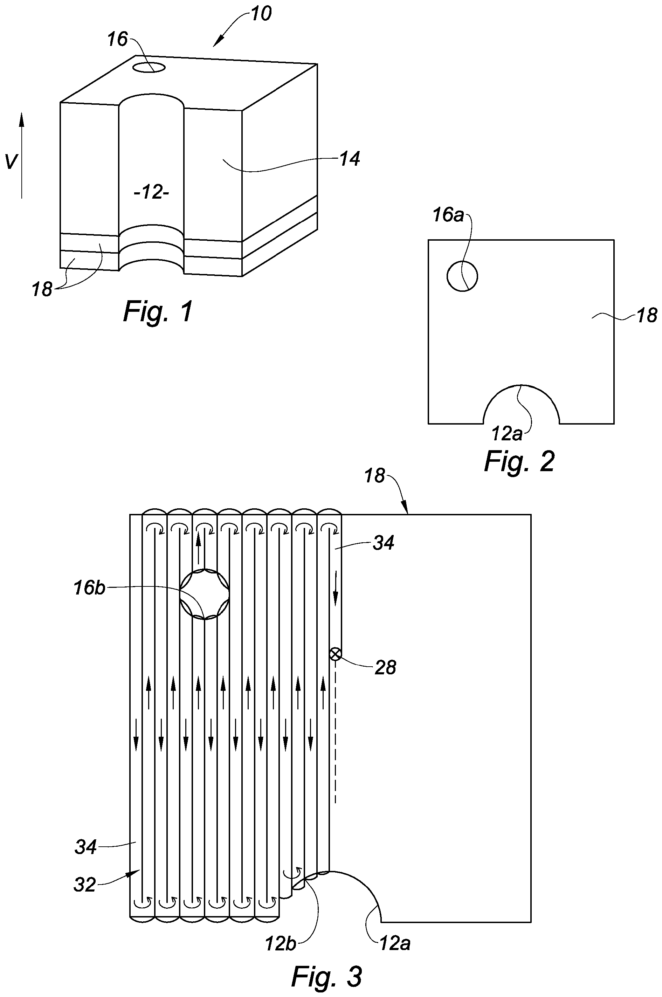

On a représenté à la figure 1 de manière très schématique une pièce 10 réalisée par impression en trois dimensions.

La pièce 10 est ici un cube comportant, selon la direction verticale V, une encoche 12 semi-cylindrique qui débouche dans une de ses faces 14, et un alésage 16.

La pièce 10 est obtenue par un procédé d'impression en trois dimensions comportant principalement une succession d'étapes au cours de chacune desquelles on réalise, par remplissage, une couche 18 pleine ou alvéolaire de la pièce à obtenir du type de celle qui a été représentée à la figure 2. Les couches 18 sont donc empilées les unes sur les autres selon la direction verticale V pour obtenir au final la pièce 10. Chaque couche 18 comporte donc une encoche 12a, l'empilement des encoches 12a formant l'encoche 12. De même, chaque couche 18 comporte une ouverture circulaire 16a, l'empilement des ouvertures circulaires 16a formant l'alésage 16.

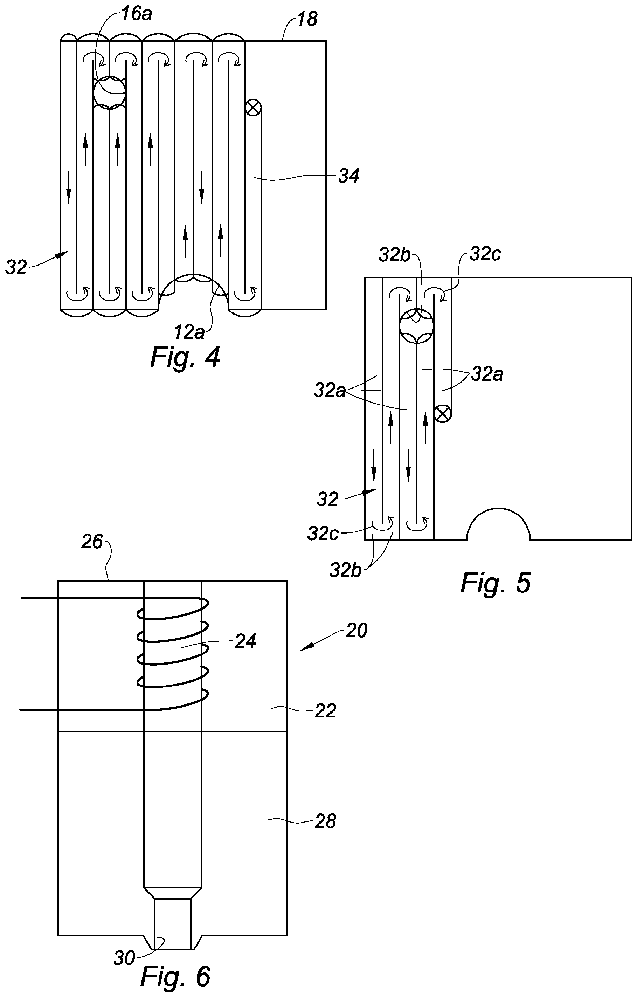

Chacune de ces étapes de réalisation d'une couche 18 par remplissage est réalisée au moyen d'une tête d'impression 20 qui a été représentée schématiquement à la figure 6.

La tête 20 comporte pour l'essentiel un élément chauffant 22 comportant un alésage chauffé 24 dont une extrémité 26 est destinée à être alimentée avec un filament thermoplastique fourni par une bobine (non représentée). Le filament traverse l'élément chauffant 22 jusqu'à être liquéfié puis est acheminé en sortie de l'élément chauffant vers une buse 28 dont un orifice de sortie 30 présente une section de sortie de surface déterminée. La tête 20 est déplacée suivant un parcours 32 déterminé sur la couche 18, la totalité du parcours 32 correspondant à la couche 18 de la pièce 10 à obtenir, de sorte que le filament thermoplastique liquéfié, sortant de la buse 28, se dépose le long de ce parcours.

La buse 28 présente, comme on l'a vu, une section de sortie de surface déterminée. En fonction de la valeur de cette surface, un cordon de largeur plus ou moins importante de filament thermoplastique liquéfié est susceptible d'être déposé le long du parcours 32 pour former la couche 18, comme l'illustrent les figures 3 et 4.

Selon la valeur de la surface de la section de sortie de la buse 28, ce dépôt est également réalisé avec un débit plus ou moins élevé de filament thermoplastique. La vitesse de déplacement de la tête 20 dépend aussi de ce débit, car elle est ajustée en conséquence pour fournir un dépôt régulier de filament thermoplastique liquéfié le long du parcours 32.

Classiquement, la réalisation d'une couche 18 selon un procédé d'impression en trois dimensions connu de l'état de la technique est effectuée à l'aide d'une seule buse 28 dont le calibre, c'est-à-dire la section de passage, est choisie avant l'impression et conservée pensant toute l'impression.

La figure 3 illustre ainsi, superposée à la forme de la couche 18 de la pièce, une partie déjà réalisée 34 du parcours 32 réalisé par une buse 28, dont la position a été représentée schématiquement par une croix. Cette configuration correspond à une buse 28 de section réduite.

De manière non limitative, le parcours 32 peut couvrir la couche 18 de manière à n'interrompre qu'un minimum le dépôt de filament thermoplastique liquéfié. Pour cela, la buse suit le parcours 32 en effectuant des allers et retours à la surface de la couche 18, et en interrompant le dépôt de filament thermoplastique liquéfié uniquement pour la réalisation de détails, c'est-à-dire, dans le cas présent, la réalisation de l'encoche 12a et de l'ouverture circulaire 16a.

Comme on le voit, du fait de la section réduite de la buse 28, le nombre d'allers et retours effectué par celle-ci pour parcourir la couche 18 est élevé, et de ce fait, la durée de réalisation de la couche 18 est élevée. En contrepartie, la section réduite de la buse 28 permet de réaliser finement des détails. Par exemple, des surplus de filament thermoplastique 12b à la surface de l'encoche 12a et 16b à la surface de l'ouverture circulaire 16a ne sont que d'épaisseur très réduite, cette épaisseur ayant été exagérée sur la figure 3 par souci de visibilité. De ce fait, avec une buse 28 de section de réduite, la réalisation des surfaces de l'encoche 12a ou de l'ouverture circulaire 16a ne nécessite que peu ou pas d'opérations de reprise par usinage.

La figure 4 illustre quant à elle, superposée à la forme de la couche 18 de la pièce, une partie déjà réalisée 34 du parcours 32 réalisé par une buse 28 de section élevée.

Comme on le voit, du fait de la section élevée de la buse 28, le nombre d'allers et retours effectué par celle-ci pour parcourir la couche 18 est réduit, et de fait la durée de réalisation de la couche 18 est réduite 18, car le remplissage des parties de la couche 18 exemptes de détail peut être effectué rapidement.

En contrepartie, la section élevée de la buse 28 ne permet pas de réaliser finement des détails. Par exemple, les surplus de filament thermoplastique 12b à la surface de l'encoche 12a et 16b à la surface de l'ouverture circulaire 16a sont d'épaisseur élevée et débordent largement sur la surface 12b de l'encoche 12a et sur la surface 16b de l'ouverture circulaire 16a. De ce fait, l'utilisation d'une buse 28 de section élevée nécessite des opérations de reprise par usinage des surfaces 12b de l'encoche 12a et 16b de l'ouverture circulaire 16a.

Actuellement, il n'existe aucune possibilité de changer la buse 28 en cours d'impression. Le choix de la buse doit être fait avant le lancement de l'impression de sorte que l'impression d'une pièce 10 résulte d'un compromis effectué, préalablement à l'impression, entre la finesse de l'impression, lorsque l'on utilise une buse 28 de section réduite, et la rapidité d'impression, lorsque l'on utilise une buse 28 de section plus importante.

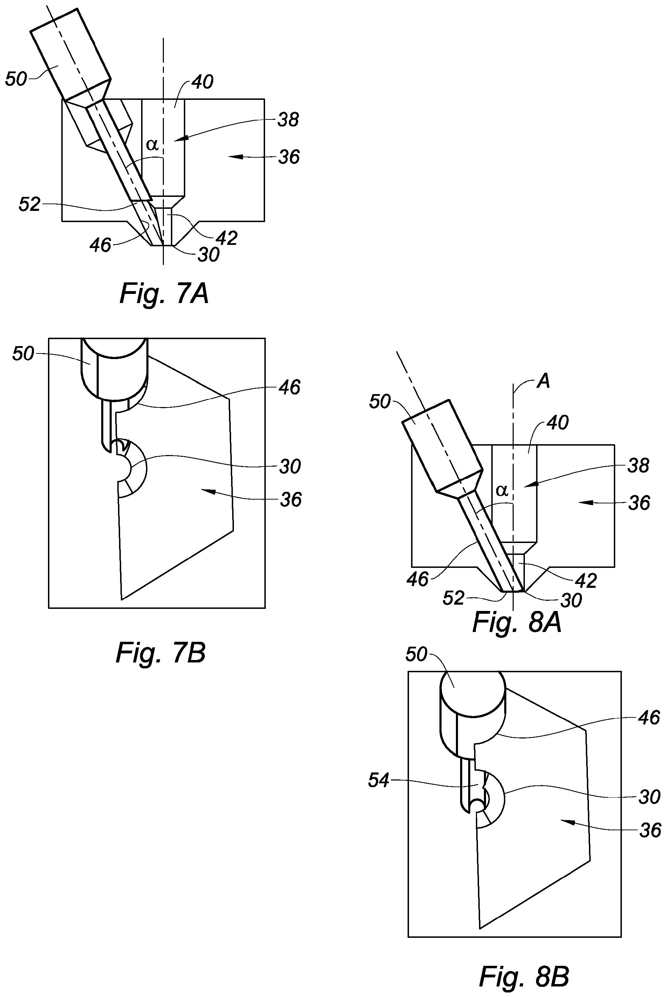

L'invention remédie à cet inconvénient en proposant un procédé d'impression en trois dimensions, comportant comme précédemment décrit une succession d'étapes au cours de chacune desquelles on réalise une couche 18 de la pièce 10 à obtenir. Au cours d'au moins une étape de réalisation d'une couche 18 par remplissage selon ce procédé, on utilise une buse 28 à section variable du type de celle qui a été représentée aux figures 7A et 7B.

La buse 28 comporte un corps 36 dans lequel est formé un conduit 38 comportant au moins un tronçon d'entrée 40 qui est configuré pour être alimenté en filament thermoplastique préalablement liquéfié par l'élément chauffant 22 précédemment décrit en référence à la figure 6, lequel n'a pas été représenté sur les figures 7A et 7B.

Le conduit 38 comporte aussi un tronçon de sortie 42 de section maximale, se terminant par l'orifice de sortie 30.

Conformément à l'invention, la buse 28 comporte des moyens de réduction mobiles de la section du tronçon de sortie 42 selon une section minimale.

Selon un autre mode de réalisation de l'invention qui pourrait être envisagé mais qui n'a pas été représenté, les moyens de réduction mobiles de la section du tronçon de sortie pourraient comporter un moyen de diaphragme agencé à l'extrémité du tronçon de sortie 42, c'est-à-dire au niveau de l'orifice 30. Un tel diaphragme peut prendre de nombreuses formes, et être par exemple un diaphragme à palette mobile similaire aux tuyères à palettes mobiles utilisées en sortie des turboréacteurs d'avions de chasse.

Toutefois, selon l'invention, comme l'illustrent les figures 7A à 8B, les moyens de réduction mobiles comportent un logement 46 qui débouche dans le tronçon de sortie 42 de la buse 28 et à l'intérieur duquel un tiroir 50 est mobile. Le tiroir 50 est mobile entre une position rétractée dans le logement 46, comme représenté à la figure 7A, et une position étendue, représentée à la figure 8A . La position rétractée de la figure 7A est associée à la section maximale de la buse 28 et, dans la position étendue de la figure 8A, le tiroir 50 fait saillie dans le tronçon de sortie 42 de la buse pour réduire la section du tronçon de sortie 42 selon la section minimale.

Le conduit 38, le logement 46 et le tiroir 50 sont sensiblement cylindriques. Pour éviter que le tiroir 50 en pénétrant dans le tronçon de sortie 42 ne perturbe l'écoulement du filament thermoplastique liquéfié, il est nécessaire que celui-ci ne soit pas agencé perpendiculairement à un axe A du conduit 38. A cet effet, un axe B du logement 46 et du tiroir 50 forme un angle α déterminé avec l'axe A du tronçon de sortie 42 du conduit 38. Cet angle résulte d'un compromis entre l'encombrement du tiroir 50 et un angle α aussi réduit que possible. Il est selon l'invention de 30 à 45 degrés.

Selon l'invention et comme l'illustre la figure 8A, également afin de ne pas perturber l'écoulement du filament thermoplastique liquéfié, dans la position étendue du tiroir 50, une extrémité libre 52 du tiroir 50 est située au niveau de l'orifice de sortie 30 du tronçon de sortie 42 de la buse 28.

De préférence, comme l'illustre la figure 8A, l'extrémité libre 52 du tiroir 50, dans sa position étendue, s'étend dans le plan de l'orifice de sortie 30 du tronçon de sortie 42 de la buse 28 et suivant toute la section de cet orifice 30.

Comme l'illustre la figure 8B, pour ne pas interrompre le flux de filament thermoplastique liquéfié, l'extrémité 52 comporte une cavité débouchante tubulaire creuse 54 qui communique avec le tronçon de sortie 42, de sorte qu'elle opère une réduction de section du tronçon de sortie 42 sans interrompre le flux de filament thermoplastique.

Idéalement, la section maximale du conduit de sortie de la buse 28 est au moins quatre fois supérieure à sa section minimale dans la position étendue du tiroir 50. Cette configuration n'est évidemment pas limitative de l'invention, et des rapports de section maximale à minimale différentes et supérieurs peuvent être envisagés. Par exemple, un rapport de section maximale à minimale de 4 est obtenu par exemple avec des sections de diamètre minimal 0,4mm à maximal 0,8mm. Avec des rapports de section de diamètre minimal 0,3mm à maximal 0,9 mm ou plus, le rapport de section maximale à minimale devient par exemple supérieur à 9.

Le tiroir 50 peut être mû de différentes façons, notamment par des moyens d'actionnement hydrauliques ou électromagnétiques, sans limitation de l'invention.

Le tiroir 50 est, comme on l'a vu, mobile entre deux positions extrêmes, rétractée et étendue. Il sera compris que des positions intermédiaires peuvent être envisagées, pour peu que les moyens d'actionnement le permettent.

Dans cette configuration du tiroir mobile entre deux positions extrêmes rétractée et étendue, une étape initiale de construction d'une couche consiste à déposer avec la buse le contour de la couche, de manière à construire une paroi extérieure délimitant la couche. Pour ce faire, il est nécessaire d'utiliser la buse avec sa seconde section minimale, de manière à déposer un contour de ladite couche avec une précision fine.

Puis, au cours d'au moins une étape de remplissage, le contour est rempli de manière pleine ou selon un quadrillage alvéolé plus ou moins dense.

A cet effet, au cours d'au moins une étape de réalisation de la couche par remplissage, on fait varier la section d'au moins une partie du tronçon 42 de sortie de la buse 28 le long d'au moins une partie 32a, 32b du parcours 32.

Ceci signifie que la section en sortie du conduit 38 n'est pas constante, mais varie en fonction de la position de la buse 28, comme représenté à la figure 5.

Sur la figure 5, le parcours 32 comporte des premières parties 32a le long desquelles la buse 28 présente la section maximale. Sur ces parties 32b, le tiroir 50 occupe donc sa position rétractée. Ces parties correspondent à des parties pleines de la pièce 10, et donc de la couche 18, qui est exempte de détails. Le long de ces parties la buse 28 assure un débit de filament thermoplastique liquéfié élevé et par conséquent, un remplissage rapide de la couche.

Le parcours 32 comporte des secondes parties 32b le long desquelles la buse 28 présente la section minimale. Sur ces parties 32b, le tiroir 50 occupe sa position étendue. Ces parties correspondent à des parties de la pièce 10, et donc de la couche 18, comportant des détails. Ces deuxièmes parties 32b sont généralement situées à proximité de bords libres de la pièce. Le long de ces parties, la buse 28 assure un débit de filament thermoplastique liquéfié réduit et par conséquent, un remplissage plus lent de la pièce mais ceci permet de réaliser des détails complexes.

Naturellement, les sections de sortie de la buse 28 ne sont pas nécessairement limitées uniquement aux sections minimale et maximale, mais il est aussi possible d'envisager des sections intermédiaires et même des sections allant croissant ou décroissant progressivement entre les sections minimale et maximale pour peu que le tiroir 50 puisse être déployé progressivement entre sa position rétractée de la figure 7A et la position étendue de la figure 7B. Des moyens d'actionnement correspondants peuvent être prévus pour permettre au tiroir 50 de conserver ces positions intermédiaires.

Dans ce cas, au cours de l'étape de réalisation d'une couche 18, on peut utiliser au moins une section de la buse 28 qui est intermédiaire entre les première et deuxième sections le long d'au moins une troisième partie 32c du parcours intermédiaire entre les première 32a et deuxième partie 32b.

Cette troisième partie peut notamment correspondre à une zone de transition du parcours 32 entre des parties 32a et 32b.

Le procédé d'impression selon l'invention permet donc d'optimiser considérablement les temps de production d'une pièce en réservant la section minimale de la buse à la préparation du contour de la pièce et à l'impression des détails et en consacrant la section maximale de la buse au remplissage de la pièce.

## Revendications

1. Procédé d'impression en trois dimensions d'une pièce (10), comportant une succession d'étapes au cours de chacune desquelles on réalise une couche pleine ou alvéolaire de la pièce (10) à obtenir, chacune de ces étapes comportant le passage d'un filament thermoplastique au travers d'un élément chauffant (22) pour le liquéfier, puis le passage du filament thermoplastique liquéfié au travers d'au moins une buse (28) ayant une section de sortie, puis la dépose du filament thermoplastique liquéfié sortant de ladite au moins une buse (28) et le déplacement simultané de ladite au moins une buse (28) en suivant un parcours (32) déterminé dont la totalité correspond à la couche (18) de la pièce (10) à obtenir,
dans lequel, au cours d'au moins une étape de réalisation d'une couche par remplissage, on utilise une dite au moins une buse (28) dont un tronçon (42) de sortie est de section de sortie variable entre une première section, maximale, et une seconde section, minimale, et en ce que l'on fait varier la section d'au moins une partie dudit tronçon (42) de sortie de ladite au moins une buse le long d'au moins une partie (32a, 32b) du parcours (32) déterminé,
**caractérisé en ce qu'**il comporte une étape initiale de réalisation d'une couche, préalable à ladite au moins une étape de réalisation d'une couche par remplissage, au cours de laquelle on utilise ladite au moins une buse ayant sa seconde section minimale pour déposer un contour de ladite couche, de manière à construire une paroi extérieure délimitant la couche.

2. Procédé d'impression selon la revendication précédente, dans lequel, au cours de l'étape de réalisation d'une couche (18) par remplissage, on utilise la première section de la buse (28) le long d'au moins une première partie (32a) du parcours associée à une partie pleine de la pièce (10) exempte de détails.

3. Procédé d'impression selon la revendication précédente, dans lequel, au cours de l'étape de réalisation d'une couche (18) par remplissage, on utilise la seconde section de la buse (28) le long d'au moins une première deuxième partie (32b) du parcours (32) associée à une partie de la pièce comportant des détails, cette deuxième partie étant située à proximité d'un bord libre de la pièce (10).

4. Procédé d'impression selon la revendication précédente, dans lequel, au cours de l'étape de réalisation d'une couche (18) par remplissage, on utilise au moins une section de la buse (28) qui est intermédiaire entre les première et deuxième sections le long d'au moins une troisième partie (32c) du parcours intermédiaire entre les première et deuxième parties (32a, 32b).

5. Buse (28) d'impression pour impression en trois dimensions à partir d'un filament thermoplastique, ladite buse (28) comportant un corps (36) dans lequel est formé un conduit (38) comportant au moins un tronçon d'entrée (40) qui est configuré pour être alimenté en filament thermoplastique préalablement liquéfié et un tronçon de sortie (42) de section maximale, la buse (28) d'impression comportant des moyens de réduction mobiles de la section du tronçon de sortie (42) selon une section minimale, les moyens de réduction mobiles comportant un logement (46) qui débouche dans le tronçon de sortie (42) de la buse (28) et à l'intérieur duquel un tiroir (50) est mobile entre une position rétractée dans le logement, associée à la section maximale de la buse (28), et une position étendue dans laquelle il fait saillie dans le tronçon de sortie (42) de la buse (28) pour réduire sa section selon la section minimale, une extrémité libre du tiroir (50) étant, dans sa position étendue, située au niveau d'un orifice de sortie (30) du tronçon de sortie (42) de la buse (28),
**caractérisée en ce que** le conduit (38), le logement (46) et le tiroir (50) sont sensiblement cylindriques et **en ce qu'**un axe (B) du logement (46) et du tiroir (50) forme un angle (α) déterminé avec un axe (A) du tronçon de sortie (42) du conduit (38), l'angle (α) étant compris entre 30° et 45°.

6. Buse (28) d'impression selon la revendication 5, dans laquelle la section maximale est au moins quatre fois supérieure à la section minimale.

## Patentansprüche

1. Verfahren zum dreidimensionalen Druck eines Werkstücks (10), das eine Abfolge von Schritten umfasst, während denen jeweils eine massive oder wabenförmige Schicht des zu erhaltenden Werkstücks (10) hergestellt wird, wobei jeder dieser Schritte das Passieren eines thermoplastischen Filaments durch ein Heizelement (22), um es zu verflüssigen, dann das Passieren des verflüssigten thermoplastischen Filaments durch mindestens eine Düse (28), die einen Austrittsquerschnitt aufweist, dann das Abscheiden des aus der mindestens einen Düse (28) austretenden verflüssigten thermoplastischen Filaments und das gleichzeitige Bewegen der mindestens einen Düse (28) entlang einer bestimmten Bahn (32), deren Gesamtheit der Schicht (18) des zu erhaltenden Werkstücks (10) entspricht, umfasst,
wobei während mindestens eines Schritts zur Herstellung einer Schicht durch Füllen mindestens eine Düse (28) verwendet wird, deren Austrittsabschnitt (42) einen zwischen einem ersten, maximalen Querschnitt und einem zweiten, minimalen Querschnitt variablen Austrittsquerschnitt aufweist, und dadurch, dass der Querschnitt mindestens eines Teils des Austrittsabschnitts (42) der mindestens einen Düse entlang mindestens eines Teils (32a, 32b) der bestimmten Bahn (32) variiert wird,
**dadurch gekennzeichnet, dass** es vor dem mindestens einen Schritt zur Herstellung einer Schicht durch Füllen einen Anfangsschritt zur Herstellung einer Schicht umfasst, während dem die mindestens eine Düse, die ihren zweiten minimalen Querschnitt aufweist, verwendet wird, um eine Kontur der Schicht abzuscheiden, um eine Außenwand zu bauen, die die Schicht begrenzt.

2. Druckverfahren nach dem vorstehenden Anspruch, wobei während des Schritts zur Herstellung einer Schicht (18) durch Füllen entlang mindestens eines ersten Teils (32a) der Bahn, der einem massiven Teil des Werkstücks (10) ohne Details zugeordnet ist, der erste Querschnitt der Düse (28) verwendet wird.

3. Druckverfahren nach dem vorstehenden Anspruch, wobei während des Schritts zur Herstellung einer Schicht (18) durch Füllen entlang mindestens eines ersten zweiten Teils (32b) der Bahn (32), der einem Teil des Werkstücks zugeordnet ist, der Details umfasst, der zweite Querschnitt der Düse (28) verwendet wird, wobei sich dieser zweite Teil in der Nähe einer freien Kante des Werkstücks (10) befindet.

4. Druckverfahren nach dem vorstehenden Anspruch, wobei während des Schritts zur Herstellung einer Schicht (18) durch Füllen entlang mindestens eines dritten Teils (32c) der Bahn zwischen dem ersten und dem zweiten Teil (32a, 32b) mindestens ein Querschnitt der Düse (28) verwendet wird, der zwischen dem ersten und dem zweiten Querschnitt liegt.

5. Druckdüse (28) zum dreidimensionalen Druck auf Grundlage eines thermoplastischen Filaments, wobei die Düse (28) einen Körper (36) umfasst, in dem ein Kanal (38) gebildet ist, der mindestens einen Eintrittsabschnitt (40), der konfiguriert ist, um mit einem zuvor verflüssigten thermoplastischen Filament beschickt zu werden, und einen Austrittsabschnitt (42) mit maximalem Querschnitt umfasst, wobei die Druckdüse (28) bewegliche Mittel zur Reduzierung des Querschnitts des Austrittsabschnitts (42) auf einen minimalen Querschnitt umfasst, wobei die beweglichen Reduzierungsmittel eine Aufnahme (46) umfassen, die in den Austrittsabschnitt (42) der Düse (28) mündet und in deren Innerem ein Schieber (50) zwischen einer in die Aufnahme eingefahrenen Position, die dem maximalen Querschnitt der Düse (28) zugeordnet ist, und einer ausgefahrenen Position beweglich ist, in der er in den Austrittsabschnitt (42) der Düse (28) hineinragt, um deren Querschnitt auf den minimalen Querschnitt zu reduzieren, wobei ein freies Ende des Schiebers (50) sich in dessen ausgefahrener Position im Bereich einer Austrittsöffnung (30) des Austrittsabschnitts (42) der Düse (28) befindet,
**dadurch gekennzeichnet, dass** der Kanal (38), die Aufnahme (46) und der Schieber (50) im Wesentlichen zylindrisch sind und dadurch, dass eine Achse (B) der Aufnahme (46) und des Schiebers (50) einen bestimmten Winkel (α) mit einer Achse (A) des Austrittsabschnitts (42) des Kanals (38) bildet, wobei der Winkel (α) im Bereich zwischen 30° und 45° liegt.

6. Druckdüse (28) nach Anspruch 5, wobei der maximale Querschnitt mindestens viermal größer ist als der minimale Querschnitt.

## Claims

1. A method for printing three-dimensionally a part (10), comprising a succession of steps during each of which a solid or honeycomb layer of the part (10) to be obtained is produced, each of these steps comprising passing a thermoplastic filament through a heating element (22) to liquefy it, then passing the liquefied thermoplastic filament through at least one nozzle (28) having an outlet cross-section, then depositing the liquefied thermoplastic filament coming out of said at least one nozzle (28) and simultaneously moving said at least one nozzle (28) along a determined path (32), the entirety of which corresponds to the layer (18) of the part (10) to be obtained,
wherein, during at least one step of producing a layer by filling, use is made of a said at least one nozzle (28), an outlet segment (42) of which has an outlet cross-section that can vary between a first, maximum cross-section and a second, minimum cross-section, and in that the cross-section of at least one portion of said outlet segment (42) of said at least one nozzle is made to vary along at least one portion (32a, 32b) of the determined path (32),
**characterized in that** it comprises an initial step of producing a layer, prior to said at least one step of producing a layer by filling, during which said at least one nozzle having its second minimum cross-section is used to deposit an outline of said layer, so as to construct an outer wall delimiting the layer.

2. The printing method according to the preceding claim, wherein, during the step of producing a layer (18) by filling, the first cross-section of the nozzle (28) is used along at least one first portion (32a) of the path associated with a solid portion of the part (10) free of details.

3. The printing method according to the preceding claim, wherein, during the step of producing a layer (18) by filling, the second cross-section of the nozzle (28) is used along at least one second portion (32b) of the path (32) associated with a portion of the part comprising details, this second portion being located in the vicinity of a free edge of the part (10).

4. The printing method according to the preceding claim, wherein, during the step of producing a layer (18) by filling, at least one cross-section of the nozzle (28) is used which is intermediate between the first and second cross-sections along at least a third portion (32c) of the intermediate path between the first and second portions (32a, 32b).

5. A printing nozzle (28) for three-dimensional printing from a thermoplastic filament, said nozzle (28) comprising a body (36) in which is formed a conduit (38) comprising at least one inlet segment (40) which is configured to be supplied with previously liquefied thermoplastic filament and one outlet segment (42) of maximum cross-section, the printing nozzle (28) comprising movable means for reducing the cross-section of the outlet segment (42) toward a minimum cross-section, the movable reduction means comprising a housing (46) which opens into the outlet segment (42) of the nozzle (28) and inside which a tray (50) is movable between a position retracted into the housing, associated with the maximum cross-section of the nozzle (28), and an extended position in which it protrudes into the outlet segment (42) of the nozzle (28) in order to reduce its cross-section toward the minimum cross-section, a free end of the tray (50) being, in its extended position, located at the level of an outlet orifice (30) of the outlet segment (42) of the nozzle (28), **characterized in that** the conduit (38), the housing (46) and the tray (50) are substantially cylindrical and **in that** an axis (B) of the housing (46) and of the tray (50) forms a given angle (α) with an axis (A) of the outlet segment (42) of the conduit (38), the angle (α) being between 30° and 45°.

6. The printing nozzle (28) according to claim 5, wherein the maximum cross-section is at least four times greater than the minimum cross-section.
